# EUROPEAN PATENT SPECIFICATION

(11) **EP 4 151 434 B1**
(45) Date of publication and mention of the grant of the patent: **05.06.2024**
(21) Application number: 22195795.4
(22) Date of filing: 15.09.2022
(51) Int. Cl.: B60C 11/03

(54) **TIRE**
REIFEN
PNEUMATIQUE

(30) Priority: 21.09.2021 JP 2021153475
(43) Date of publication of application: 22.03.2023
(73) Proprietor: Sumitomo Rubber Industries, Ltd., Kobe-shi, Hyogo 651-0072 (JP)
(72) Inventor: SHIMIZU, Akikazu, Kobe-shi, 651-0072 (JP); KNISPEL, Oliver, 63456 Hanau (DE)
(74) Representative: Manitz Finsterwald Patent- und Rechtsanwaltspartnerschaft mbB

(56) References cited:
- JP-A- 2004 352 049
- JP-A- 2012 011 883
- JP-A- 2015 051 751
- JP-A- 2015 171 840
- JP-A- 2016 117 356
- JP-A- 2018 012 437
- US-A1- 2013 068 360
- US-A1- 2019 023 077

## Description

### BACKGROUND OF THE INVENTION

### Field of the Invention

The present invention relates to a tire.

### Background Art

JP 2013-139166 A suggests a pneumatic tire that includes a plurality of outer shoulder lateral grooves extending across an outer shoulder land portion. In the pneumatic tire, the outer shoulder lateral grooves are expected to enhance drainage performance and on-snow performance.

JP 2004-352049 A discloses a tire according to the preamble of claim 1. Other related tires are for example disclosed in JP 2012-011883 A, JP 2015-051751 A, and JP 2018-012437 A.

In recent years, tires have been required to have further enhanced wet performance. Meanwhile, the enhancement of wet performance should not impair steering stability on dry road surfaces.

The present invention has been made in view of the aforementioned circumstances, and a main object of the present invention is to provide a tire having enhanced wet performance while maintaining steering stability on dry road surfaces.

### SUMMARY OF THE INVENTION

The present invention is directed to a tire including a tread portion. The tread portion includes a plurality of circumferential grooves disposed between a first tread end and a second tread end so as to continuously extend in a tire circumferential direction, and a plurality of land portions demarcated by the plurality of circumferential grooves. The plurality of circumferential grooves include a first shoulder circumferential groove disposed closest to the first tread end. The plurality of land portions include a first shoulder land portion demarcated by the first shoulder circumferential groove, the first shoulder land portion including the first tread end. The first shoulder land portion includes a plurality of first shoulder lateral grooves extending from the first shoulder circumferential groove to a position beyond the first tread end. At least one of the first shoulder lateral grooves includes an inner end connected to the first shoulder circumferential groove, a maximum groove width portion at which the first shoulder lateral groove has a maximum groove width in a ground-contact surface of the first shoulder land portion, and an outer portion disposed outward of the first tread end in a tire axial direction, the outer portion including a first portion, and a second portion disposed outward of the first portion in the tire axial direction. A groove width at the inner end and a groove width, on the first tread end, of the first shoulder lateral groove are each less than the maximum groove width. A groove width of the outer portion is reduced outward in the tire axial direction, and a groove width of the first portion is reduced outward in the tire axial direction at a first reduction rate. A groove width of the second portion is reduced outward in the tire axial direction at a second reduction rate less than the first reduction rate. Optional features are defined in the dependent claims.

The tire of the present invention has the above-described configuration and can thus have enhanced wet performance while maintaining steering stability on dry road surfaces.

### BRIEF DESCRIPTION OF THE DRAWINGS

FIG. 1 is a development of a tread portion according to an embodiment of the present invention;
FIG. 2 is an enlarged view of a first shoulder land portion in FIG. 1;
FIG. 3 is an enlarged view of a first shoulder lateral groove in FIG. 2;
FIG. 4 is a cross-sectional view taken along a line A-A in FIG. 2;
FIG. 5 is an enlarged view of a second shoulder land portion in FIG. 1;
FIG. 6 is an enlarged view of a first middle land portion, a second middle land portion, and a crown land portion in FIG. 1;
FIG. 7 is a cross-sectional view taken along a line B-B in FIG. 6; and
FIG. 8 is a development of a tread portion of a tire of a comparative example.

### DETAILED DESCRIPTION

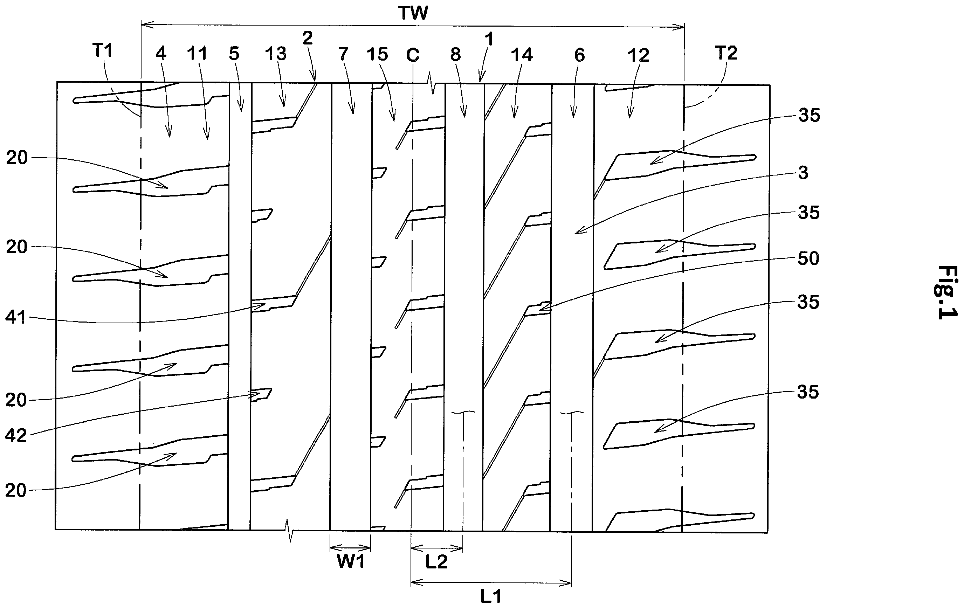

An embodiment of the present invention will be described below with reference to the drawings. FIG. 1 is a development of a tread portion 2 of a tire 1 according to an embodiment of the present invention. The tire 1 of the present embodiment is preferably used as, for example, a pneumatic tire for a passenger car. However, the present invention is not limited thereto, and may be applied to a heavy-duty pneumatic tire or a non-pneumatic tire the inside of which is not filled with pressurized air.

As shown in FIG. 1, the tread portion 2 according to the present invention includes a plurality of circumferential grooves 3 disposed between a first tread end T1 and a second tread end T2 so as to continuously extend in a tire circumferential direction, and a plurality of land portions 4 demarcated by the plurality of circumferential grooves 3. The tire 1 of the present embodiment is configured as a so-called five-rib tire in which the tread portion 2 includes five land portions 4 demarcated by four circumferential grooves 3. However, the present invention is not limited thereto.

For example, the tread portion 2 of the present embodiment has a designated mounting direction to a vehicle. Thus, the first tread end T1 is disposed on the outer side of a vehicle when the tire is mounted to the vehicle. The second tread end T2 is disposed on the inner side of the vehicle when the tire is mounted to the vehicle. The mounting direction to a vehicle is, for example, indicated by a character or symbol on a sidewall portion (not shown). The tire 1 according to the present invention is not limited thereto, and a mounting direction to a vehicle may not necessarily be designated.

The first tread end T1 and the second tread end T2 each correspond to an outermost ground contact portion in the tire axial direction when 70% of a normal load is applied to the tire 1 in a normal state, and the tire 1 is in contact with a plane at a camber angle of 0°.

The "normal state" represents a state in which the tire is mounted on a normal rim and is inflated to a normal internal pressure and no load is applied to the tire for pneumatic tires for which various standards are defined. For non-pneumatic tires and tires for which various standards are not defined, the normal state represents a standard use state, corresponding to a purpose of use of the tire, in which the tire is not mounted to a vehicle and no load is applied to the tire. In the description herein, unless otherwise specified, dimensions and the like of components of the tire are represented by values measured in the normal state.

The "normal rim" represents a rim that is defined by a standard, in a standard system including the standard on which the tire is based, for each tire, and is, for example, "standard rim" in the JATMA standard, "Design Rim" in the TRA standard, or "Measuring Rim" in the ETRTO standard.

The "normal internal pressure" represents an air pressure that is defined by a standard, in a standard system including the standard on which the tire is based, for each tire, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The "normal load" represents a load that is defined by a standard, in a standard system including the standard on which the tire is based, for each tire, and is "maximum load capacity" in the JATMA standard, the maximum value recited in the table "TIRE LOAD LIMITS AT VARIOUS COLD INFLATION PRESSURES" in the TRA standard, or "LOAD CAPACITY" in the ETRTO standard, for pneumatic tires for which various standards are defined. For non-pneumatic tires and tires for which various standards are not defined, the "normal load" represents a load that acts on one tire in a standard mounting state of the tire. The "standard mounting state" represents a state in which a tire is mounted to a standard vehicle corresponding to the purpose of use of the tire and the vehicle is stationary on a flat road surface in a state where the vehicle can run.

The plurality of circumferential grooves 3 include a first shoulder circumferential groove 5 disposed closest to the first tread end T1. Furthermore, the plurality of circumferential grooves 3 of the present embodiment include a second shoulder circumferential groove 6, a first crown circumferential groove 7, and a second crown circumferential groove 8. The second shoulder circumferential groove 6 is disposed closest to the second tread end T2. The first crown circumferential groove 7 is disposed between the first shoulder circumferential groove 5 and a tire equator C. The second crown circumferential groove 8 is disposed between the second shoulder circumferential groove 6 and the tire equator C.

A distance L1 in the tire axial direction from the tire equator C to a groove center line of the first shoulder circumferential groove 5 or the second shoulder circumferential groove 6 is, for example, preferably 25% to 35% of a tread width TW. A distance L2 in the tire axial direction from the tire equator C to a groove center line of the first crown circumferential groove 7 or the second crown circumferential groove 8 is, for example, preferably 5% to 15% of the tread width TW. The tread width TW refers to a distance in the tire axial direction from the first tread end T1 to the second tread end T2 in the normal state.

For example, each circumferential groove 3 of the present embodiment linearly extends in parallel to the tire circumferential direction. Each circumferential groove 3 may extend, for example, in a wavy manner.

Each circumferential groove 3 preferably has a groove width W1 of at least 3 mm. The groove width W1 of each circumferential groove 3 is, for example, preferably 4.0% to 8.5% of the tread width TW. In the description herein, the groove width refers to a distance between two edges of the groove in the normal state. The two edges refer to boundaries, between the opening of the groove and the ground-contact surface, formed when 70% of the normal load is applied to the tire 1 in the normal state, and the outer surface of the tread portion 2 is in contact with a plane at a camber angle of 0°.

In the present embodiment, the first shoulder circumferential groove 5 has the smallest groove width among the plurality of circumferential grooves 3. However, the present invention is not limited thereto. Each circumferential groove 3 preferably has a depth of, for example, 5 to 10 mm in the case of a pneumatic tire for a passenger car.

The plurality of land portions 4 according to the present invention include a first shoulder land portion 11. The first shoulder land portion 11 includes the first tread end T1, and is demarcated so as to be disposed outward of the first shoulder circumferential groove 5 in the tire axial direction.

The land portions 4 according to the present invention include a second shoulder land portion 12, a first middle land portion 13, a second middle land portion 14, and a crown land portion 15. The second shoulder land portion 12 includes the second tread end T2, and is demarcated so as to be disposed outward of the second shoulder circumferential groove 6 in the tire axial direction. The first middle land portion 13 is demarcated between the first shoulder circumferential groove 5 and the first crown circumferential groove 7. The second middle land portion 14 is demarcated between the second shoulder circumferential groove 6 and the second crown circumferential groove 8. The crown land portion 15 is demarcated between the first crown circumferential groove 7 and the second crown circumferential groove 8.

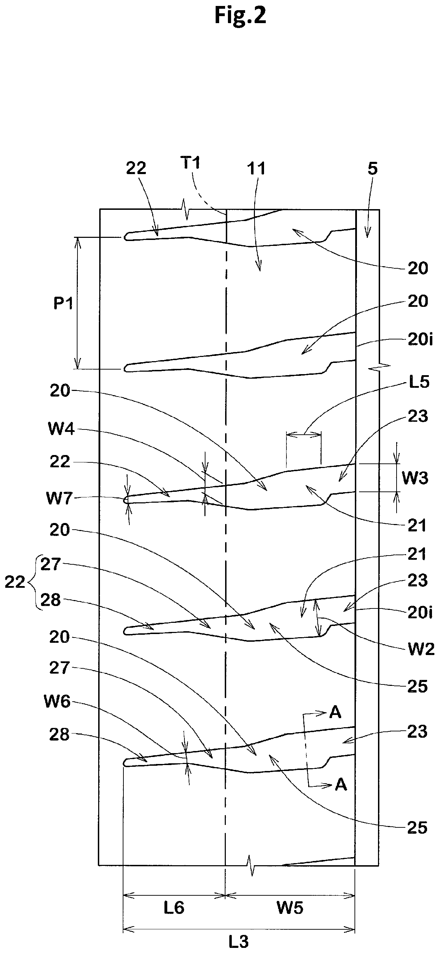

FIG. 2 is an enlarged view of the first shoulder land portion 11. As shown in FIG. 2, a plurality of first shoulder lateral grooves 20 are disposed in the first shoulder land portion 11. The first shoulder lateral groove 20 extends from the first shoulder circumferential groove 5 to a position beyond the first tread end T1.

At least one of the first shoulder lateral grooves 20 includes an inner end 20i connected to the first shoulder circumferential groove 5, a maximum groove width portion 21 at which the first shoulder lateral groove 20 has a maximum groove width W2 in the ground-contact surface of the first shoulder land portion 11, and an outer portion 22 disposed outward of the first tread end T1 in the tire axial direction. The maximum groove width portion 21 includes, in addition to a portion at which the first shoulder lateral groove 20 has the maximum groove width W2, a portion at which the first shoulder lateral groove 20 has a groove width of not less than 95% of the maximum groove width W2.

A groove width W3 at the inner end 20i of the first shoulder lateral groove 20, and a groove width W4, on the first tread end T1, of the first shoulder lateral groove 20, are each less than the maximum groove width W2. In addition, the groove width of the outer portion 22 of the first shoulder lateral groove 20 is reduced outward in the tire axial direction. In the present invention, by adopting the above-described configuration, wet performance can be enhanced while steering stability on dry road surfaces (hereinafter, may be simply referred to as "steering stability") is maintained. As the reason, the following mechanism is inferred.

In the present invention, the maximum groove width portion 21, of the first shoulder lateral groove 20, disposed in the ground-contact surface of the first shoulder land portion 11 can exhibit excellent drainage performance, to significantly enhance wet performance.

In addition, in the present invention, the groove width W3 at the inner end 20i of the first shoulder lateral groove 20, and the groove width W4 on the first tread end T1, are less than the maximum groove width W2. Therefore, even when a ground contact pressure acts on the first shoulder land portion 11, the first shoulder lateral groove 20 is unlikely to be opened, and the pattern stiffness of the first shoulder land portion 11 is maintained. Therefore, steering stability on dry road surfaces can be effectively maintained.

Furthermore, in the present invention, the groove width of the outer portion 22 of the first shoulder lateral groove 20 is reduced outward in the tire axial direction. Therefore, a region of the first shoulder land portion 11 disposed outward of the first tread end T1 has a high stiffness. Thus, for example, on the outer side of the tire during cornering, when increase of a ground contact pressure moves the ground contact end outward in the tire axial direction, the tire comes into contact with the ground in a region having a high stiffness, and the steering stability is more assuredly maintained. It is inferred that the above-described mechanism allows the tire according to the present invention to have enhanced wet performance while maintaining steering stability on dry road surfaces.

The structure of the present embodiment will be described below in more detail. The structures described below represent specific modes of the present embodiment. Therefore, needless to say, also when the structures described below are not provided, the technique of the present invention can exhibit the above-described effects. Also when any one of the structures described below is applied alone to the tire of the present invention having the above-described features, improvement of performance corresponding to each structure can be expected. Furthermore, in a case where some of the structures described below are applied in combination, complex performance improvement corresponding to the structures can be expected.

In the first shoulder land portion 11 of the present embodiment, the plurality of first shoulder lateral grooves 20 are merely disposed, and no other grooves or recesses are disposed. In the present embodiment, the plurality of first shoulder lateral grooves 20 have substantially the same shape. One pitch length P1 in the tire circumferential direction between two first shoulder lateral grooves 20 adjacent to each other in the tire circumferential direction is, for example, 100% to 120% of a width W5, in the tire axial direction, of the ground-contact surface of the first shoulder land portion 11. However, the present invention is not limited thereto. The one pitch length represents a distance in the tire circumferential direction between the groove center lines of two first shoulder lateral grooves 20 adjacent to each other in the tire circumferential direction. In a case where the distance in the tire circumferential direction varies in the tire axial direction, the center value is adopted.

The groove width W3 of the inner end 20i of the first shoulder lateral groove 20 is, for example, 50% to 90% and preferably 70% to 80% of the maximum groove width W2. The first shoulder lateral groove 20 which includes the inner end 20i having such a structure contributes to well-balanced enhancement of steering stability and wet performance.

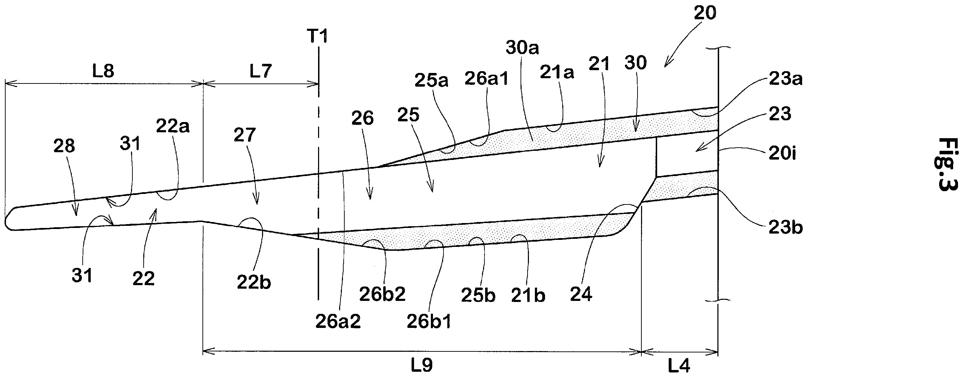

FIG. 3 is an enlarged view of the first shoulder lateral groove 20. As shown in FIG. 3, the first shoulder lateral groove 20 of the present embodiment includes, for example, an inner portion 23 that extends outward from the inner end 20i in the tire axial direction with a uniform groove width. A length L4, in the tire axial direction, of the inner portion 23 is, for example, 10% to 30% and preferably 15% to 25% of the width W5 (shown in FIG. 2, the same applies to the following description) of the ground-contact surface of the first shoulder land portion 11. The inner portion 23 having such a structure contributes to well-balanced enhancement of steering stability and wet performance. In the description herein, the structure such as the length of the groove is measured and defined at the groove center line.

The first shoulder lateral groove 20 includes, for example, a body portion 25 between the inner portion 23 and the outer portion 22. The body portion 25 includes the maximum groove width portion 21 described above. In the present embodiment, the maximum groove width portion 21 is connected so as to be disposed outward of the inner portion 23 in the tire axial direction. Specifically, an edge 23a on one side (upper side in FIG. 3), in the tire circumferential direction, of the inner portion 23, and an edge 21a on the one side, in the tire circumferential direction, of the maximum groove width portion 21 are linearly connected directly to each other. An edge 23b on the other side (lower side in FIG. 3), in the tire circumferential direction, of the inner portion 23, and an edge 21b on the other side, in the tire circumferential direction, of the maximum groove width portion 21 are connected through a circumferential edge 24 extending at an angle of 20 to 40° with respect to the tire circumferential direction. Thus, the groove width of the first shoulder lateral groove 20 increases stepwise in the inner portion 23 and the maximum groove width portion 21.

The developers have found as a result of various experiments that drainage (groove volume) at almost the center, in the tire axial direction, of the ground-contact surface of the first shoulder land portion 11 makes a great contribution to the drainage performance of the first shoulder lateral groove 20. Therefore, in a preferable embodiment, the maximum groove width portion 21 of the present embodiment is disposed at almost the center, in the tire axial direction, of the ground-contact surface of the first shoulder land portion 11. Thus, the maximum groove width portion 21 can more effectively exhibit drainage. This configuration includes at least an embodiment in which the maximum groove width portion 21 extends across the center position, in the tire axial direction, of the ground-contact surface of the first shoulder land portion 11. The configuration also includes an embodiment in which, even when the maximum groove width portion 21 does not extend across the center position, a distance between the maximum groove width portion 21 and the center position is not greater than 5% of the width W5, in the tire axial direction, of the ground-contact surface of the first shoulder land portion 11.

As shown in FIG. 2, the maximum groove width W2 is, for example, 20% to 35% of the one pitch length P1 for the first shoulder lateral groove 20. A length L5, in the tire axial direction, of the maximum groove width portion 21 is, for example, 25% to 45% and preferably 30% to 40% of the width W5, in the tire axial direction, of the ground-contact surface of the first shoulder land portion 11. The first shoulder lateral groove 20 that includes the maximum groove width portion 21 having such a structure can exhibit excellent wet performance while maintaining steering stability.

As shown in FIG. 3, the body portion 25 includes, for example, a groove width reduction portion 26 having a groove width reduced from the maximum groove width portion 21 toward the first tread end T1. An edge on the one side, in the tire circumferential direction, of the groove width reduction portion 26 includes a portion 26a1 that is connected to the edge 21a of the maximum groove width portion 21 and extends at an angle greater than that of the edge of the maximum groove width portion 21 with respect to the tire axial direction, and a portion 26a2 that extends to the first tread end T1 at the same angle as that of the edge of the maximum groove width portion 21 with respect to the tire axial direction. An edge on the other side, in the tire circumferential direction, of the groove width reduction portion 26 includes a portion 26b1 that is linearly connected directly to the edge of the maximum groove width portion 21, and a portion 26b2 that extends to the first tread end T1 at an angle greater than that of the edge 21b of the maximum groove width portion 21 with respect to the tire axial direction. In the groove width reduction portion 26 having such a structure, turbulent flow is unlikely to occur when water moves in the groove, and the groove width in the vicinity of the first tread end T1 can be reduced while the drainage of the first shoulder lateral groove 20 is maintained.

As shown in FIG. 2, the groove width W4, at the first tread end T1, of the first shoulder lateral groove 20 is, for example, 45% to 70% and preferably 50% to 65% of the maximum groove width W2. The first shoulder lateral groove 20 having such a structure can also reduce pitch sound that occurs during running on a dry road surface while exhibiting the above-described effects.

For example, preferably, the groove width of the outer portion 22 of the present embodiment is continuously reduced outward from the first tread end T1 in the tire axial direction. Thus, uneven wear around the outer portion 22 is reduced. However, the present invention is not limited thereto, and the outer portion 22 may include, for example, a portion extending with a uniform groove width.

The outer portion 22 includes, for example, a first portion 27 on the first tread end T1 side, and a second portion 28 disposed outward of the first portion 27 in the tire axial direction. The groove width of the first portion 27 is reduced outward in the tire axial direction at a first reduction rate. The groove width of the second portion 28 is reduced outward in the tire axial direction at a second reduction rate less than the first reduction rate. The outer portion 22 having such a structure can provide excellent steering stability even in a high load applied state in which a high load acts on the tread portion. The high load applied state means that, as in the front wheel during braking or the outer wheel during cornering, a higher load acts on the tread portion than during normal running, and the outer portion 22 (particularly, the second portion 28) is in contact with the ground.

The first and second reduction rates are each defined as a ratio of the maximum groove width of the corresponding portion relative to the smallest groove width of the portion. The first reduction rate of the first portion 27 is, for example, 200% to 300%. The second reduction rate of the second portion 28 is, for example, 130% to 200%. The angle between the two edges of the first portion 27 is, for example, 10 to 25°. The angle between the two edges of the second portion 28 is less than that of the first portion 27, and is, for example, less than 10°.

A length L6, in the tire axial direction, of the outer portion 22 is, for example, not greater than the width W5, in the tire axial direction, of the ground-contact surface of the first shoulder land portion 11. Specifically, the length L6 is 70% to 90% and preferably 75% to 85% of the width W5. As shown in FIG. 3, a length L7, in the tire axial direction, of the first portion 27 is 20% to 50% of the length L6, in the tire axial direction, of the outer portion 22. A length L8, in the tire axial direction, of the second portion 28 is 50% to 80% of the length L6 (shown in FIG. 2, the same applies to the following description), in the tire axial direction, of the outer portion 22. The outer portion 22 having such a structure allows well-balanced enhancement of wet performance and steering stability in the high load applied state.

From the viewpoint of sufficiently enhancing steering stability in the high load applied state, the length L8 of the second portion 28 is, for example, preferably greater than the length L4, in the tire axial direction, of the inner portion 23. In addition, from the viewpoint of ensuring sufficient lengths of the first portion 27 and the body portion 25, the length L8 of the second portion 28 is, for example, preferably less than a length L9, in the tire axial direction, of a portion of the first shoulder lateral groove 20 excluding the second portion 28 and the inner portion 23.

As shown in FIG. 2, a groove width W6 at a boundary between the first portion 27 and the second portion 28 is, for example, 25% to 35% of the maximum groove width W2. A groove width W7 at an outer end, in the tire axial direction, of the first shoulder lateral groove 20 is, for example, 10% to 30% and preferably 15% to 25% of the maximum groove width W2. The groove width at the outer end represents a groove width at ends, in the tire axial direction, of two edges extending along a groove length direction.

The first shoulder lateral groove 20 has, for example, the maximum depth at the body portion 25. The maximum depth of the first shoulder lateral groove 20 is, for example, 60% to 90% and preferably 70% to 80% of the maximum depth of the first shoulder circumferential groove 5.

The inner portion 23 has a depth less than that of the body portion 25. The maximum depth of the inner portion 23 is, for example, 45% to 65% and preferably 50% to 60% of the maximum depth of the first shoulder lateral groove 20.

For example, the depth of the outer portion 22 is reduced outward in the tire axial direction. The depth at the outer end of the first shoulder lateral groove 20 is, for example, 5% to 25% and preferably 10% to 20% of the maximum depth of the first shoulder lateral groove 20. The outer portion 22 having such a structure contributes to well-balanced enhancement of steering stability and wet performance.

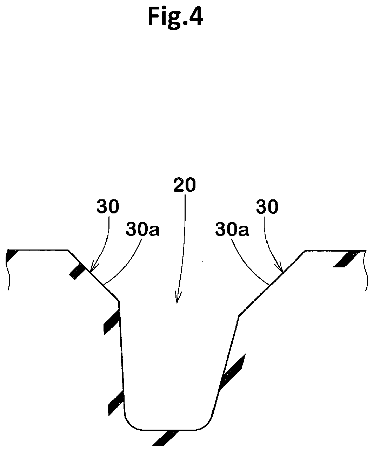

FIG. 4 is a cross-sectional view taken along a line A-A of the first shoulder lateral groove 20 in FIG. 2. As shown in FIG. 4, a chamfered portion 30 is, for example, preferably connected to at least a portion of the edge of the first shoulder lateral groove 20. The chamfered portion 30 includes an inclined surface 30a extending diagonally from the edge. The inclined surface 30a extends so as to be inclined between the ground-contact surface of the first shoulder land portion 11 and a groove wall of the first shoulder lateral groove 20. The angle of the inclined surface 30a with respect to the tire radial direction is, for example, 30 to 60°. For example, the inclined surface 30a has a width of not greater than 2 mm and of preferably 0.5 to 1.5 mm, in the tread planar view. For example, the inclined surface 30a has a depth of not greater than 2 mm and of preferably 0.5 to 1.5 mm. The chamfered portion 30 having such a structure contributes to reduction of uneven wear of the first shoulder land portion 11. Also in a case where the chamfered portion is connected to the edge of the groove, the groove width of the groove in the description herein represents a distance between the two edges of the groove in the normal state. As described above, the two edges refer to boundaries, between the opening of the groove and the ground-contact surface, formed when 70% of the normal load is applied to the tire 1 in the normal state, and the outer surface of the tread portion 2 is in contact with a plane at a camber angle of 0°.

In FIG. 3, dots are formed on the inclined surface 30a of the chamfered portion 30. As shown in FIG. 3, in the present embodiment, an edge (edge on the upper side in FIG. 3) on the one side, in the tire circumferential direction, of the first shoulder lateral groove 20 and an edge (edge on the lower side in FIG. 3) on the other side, in the tire circumferential direction, of the first shoulder lateral groove 20 each have both a region to which the chamfered portion 30 is connected and a region to which the chamfered portion 30 is not connected (hereinafter, such a region is referred to as a non-chamfered portion 31). The non-chamfered portion 31 refers to a portion in which the ground-contact surface of the first shoulder land portion 11 is connected to the groove wall of the first shoulder lateral groove 20 to form an angular portion having an almost right angle.

The chamfered portion 30 connected to the edge on the one side preferably extends from the inner end 20i of the first shoulder lateral groove 20 to a position preceding the first tread end T1. That is, on the first tread end T1, the edge on the one side is formed as the non-chamfered portion 31. A distance between an end of the chamfered portion 30 and the first tread end T1 is, for example, 3 to 15 mm and preferably 5 to 10 mm. The edge on the one side linearly extends from the inner end 20i to the maximum groove width portion 21 in the first shoulder lateral groove 20. The chamfered portion 30 connected to the edge on the one side extends from the inner end 20i to the maximum groove width portion 21 in the first shoulder lateral groove 20 with a uniform width. Thus, uneven wear of the first shoulder land portion 11 is reduced.

The chamfered portion 30 connected to the edge on the other side is disposed at least in the inner portion 23 and the maximum groove width portion 21 of the first shoulder lateral groove 20. In the present embodiment, the chamfered portion 30 connected to the edge on the other side extends from the maximum groove width portion 21 to a position beyond the first tread end T1. That is, on the first tread end T1, the chamfered portion 30 is connected to the edge on the other side. A distance from an end, in the tire axial direction, of the chamfered portion 30 connected to the edge on the other side to the first tread end T1 is, for example, not greater than 5 mm.

As described above, in the present embodiment, on the first tread end T1, the edge on the one side of the first shoulder lateral groove 20 is formed as the non-chamfered portion 31, and the chamfered portion 30 is connected to the edge on the other side of the first shoulder lateral groove 20. Such an arrangement of the chamfered portion 30 can reduce uneven wear in the vicinity of the first tread end T1 in the first shoulder lateral groove 20 while ensuring frictional force due to the edge in the vicinity of the first tread end T1.

The inner portion 23 and the maximum groove width portion 21 of the first shoulder lateral groove 20 are structured such that the chamfered portions 30 are connected to the edges on both sides except for the circumferential edge 24. An edge 22a on the one side, in the tire circumferential direction, of the outer portion 22 is entirely formed as the non-chamfered portion 31. The chamfered portion 30 is connected merely to an end portion, on the first tread end T1 side, of an edge 22b on the other side, in the tire circumferential direction, of the outer portion 22, and the other portion of the edge 22b is formed as the non-chamfered portion 31. Therefore, at least in the second portion 28, the edges on both sides are each formed as the non-chamfered portion 31. Thus, uneven wear of the first shoulder land portion 11 can be reduced, and, when the outer portion 22 is in contact with the ground, the non-chamfered portion 31 can provide a high frictional force.

From a similar viewpoint, the chamfered portion 30 is connected to an edge 25a on the one side, in the tire circumferential direction, of the body portion 25 in a portion connected to the maximum groove width portion 21, and an end portion of the edge 25a on the first tread end T1 side is formed as the non-chamfered portion 31. The chamfered portion 30 is connected to the entirety of an edge 25b on the other side, in the tire circumferential direction, of the body portion 25.

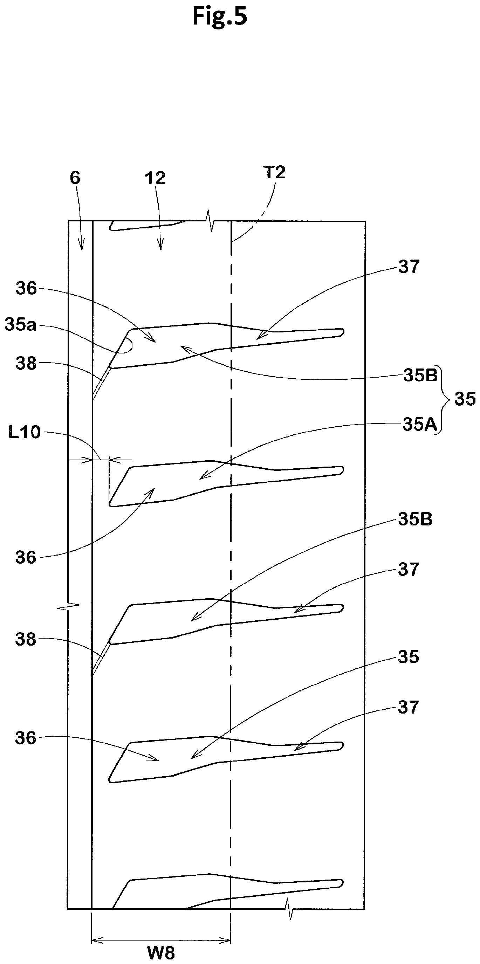

FIG. 5 is an enlarged view of the second shoulder land portion 12. As shown in FIG. 5, a plurality of second shoulder lateral grooves 35 are disposed in the second shoulder land portion 12. The second shoulder lateral groove 35 of the present embodiment includes, for example, a body portion 36 extending from a position away from the second shoulder circumferential groove 6 to the second tread end T2, and an outer portion 37 disposed outward of the second tread end T2 in the tire axial direction. The above-described configuration of the outer portion 22 (shown in FIGS. 2 and 3) of the first shoulder lateral groove 20 can be applied to the outer portion 37 of the second shoulder lateral groove 35. The configuration of the body portion 25 of the first shoulder lateral groove 20, excluding a configuration described below, can be applied to the body portion 36 of the second shoulder lateral groove 35.

A distance L10 in the tire axial direction from the body portion 36 of the second shoulder lateral groove 35 to the second shoulder circumferential groove 6 is, for example, 5% to 15% of a width W8, in the tire axial direction, of the ground-contact surface of the second shoulder land portion 12. The second shoulder lateral groove 35 that includes the body portion 36 having such a structure can enhance wet performance while maintaining stiffness of the second shoulder land portion 12.

The body portion 36 of the second shoulder lateral groove 35 includes, at an inner end thereof in the tire axial direction, an inclined edge 35a that extends in the tire circumferential direction so as to be inclined. An angle of the inclined edge 35a with respect to the tire circumferential direction is, for example, 20 to 40°. The inclined edge 35a having such a structure provides a frictional force in the tire axial direction, and enhances cornering performance on wet road surfaces.

The second shoulder lateral groove 35 of the present embodiment includes a standard second shoulder lateral groove 35A and a shallow-groove-equipped second shoulder lateral groove 35B. In the present embodiment, the standard second shoulder lateral grooves 35A and the shallow-groove-equipped second shoulder lateral grooves 35B alternate in the tire circumferential direction.

The standard second shoulder lateral groove 35A does not have a groove between the body portion 36 and the second shoulder circumferential groove 6. The shallow-groove-equipped second shoulder lateral groove 35B includes a shallow groove portion 38 that extends from the body portion 36 to the second shoulder circumferential groove 6. The shallow groove portion 38 has a groove width and depth of, for example, 0.3 to 1.5 mm and preferably 0.5 to 1.0 mm. The shallow groove portion 38 having such a structure can supplement a frictional force in the tire axial direction on wet road surfaces.

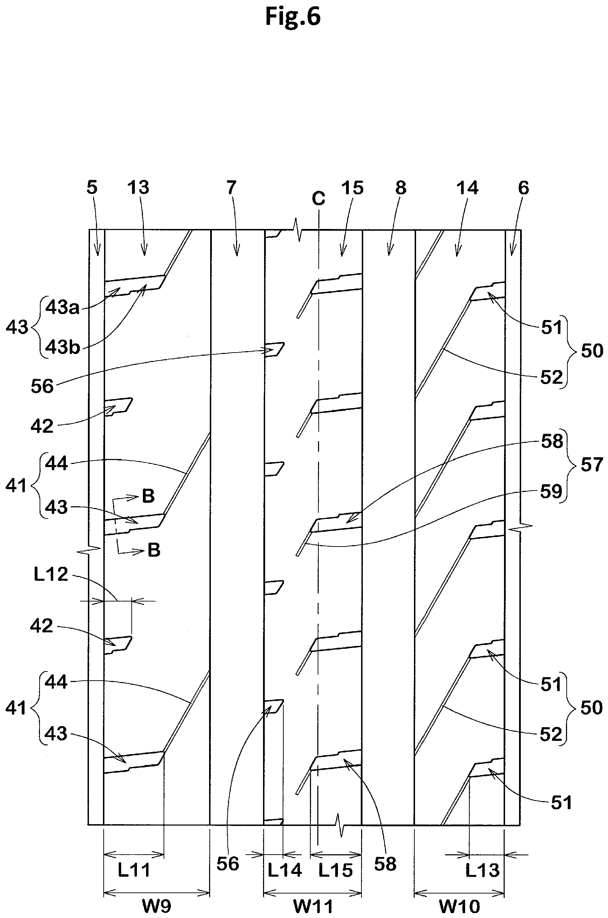

FIG. 6 is an enlarged view of the first middle land portion 13, the second middle land portion 14, and the crown land portion 15. As shown in FIG. 6, in the first middle land portion 13, a plurality of first middle lateral grooves 41 and a plurality of first middle terminating grooves 42 are disposed. The first middle lateral grooves 41 and the first middle terminating grooves 42 preferably alternate in the tire circumferential direction.

The first middle lateral groove 41 includes, for example, a body portion 43 that extends from the first shoulder circumferential groove 5 in the tire axial direction, and a shallow groove portion 44 that extends from the body portion 43 to the first crown circumferential groove 7.

The body portion 43 is, for example, preferably connected to the first shoulder circumferential groove 5 at a position different from the inner portion 23 of the first shoulder lateral groove 20 in the tire circumferential direction. Thus, superposition of pitch sounds by the lateral grooves and uneven wear of the land portions are reduced.

The body portion 43 of the first middle lateral groove 41 is, for example, disposed at an angle of not greater than 10° with respect to the tire axial direction. A length L1 1, in the tire axial direction, of the body portion 43 is, for example, 40% to 60% of a width W9, in the tire axial direction, of the ground-contact surface of the first middle land portion 13. In a more preferable embodiment, the length L11, in the tire axial direction, of the body portion 43 of the first middle lateral groove 41 is greater than a length, in the tire axial direction, of the inner portion 23 (shown in FIG. 2) of the first shoulder lateral groove 20, and is less than the length, in the tire axial direction, of the body portion 25 (shown in FIG. 2) of the first shoulder lateral groove 20. The first middle lateral groove 41 that includes the body portion 43 having such a structure contributes to well-balanced enhancement of steering stability and wet performance.

The maximum groove width of the body portion 43 is, for example, preferably less than the maximum groove width W2 (shown in FIG. 2) of the first shoulder lateral groove 20, and preferably less than the groove width W3 (shown in FIG. 2) at the inner end 20i of the first shoulder lateral groove 20. The maximum groove width of the body portion 43 is 35% to 50% of the maximum groove width W2 of the first shoulder lateral groove 20. The first middle lateral groove 41 that includes the body portion 43 having such a structure can enhance steering stability and wet performance in cooperation with the first shoulder lateral groove 20.

The body portion 43 includes, for example, a wide width portion 43a that is connected to the first shoulder circumferential groove 5, and a narrow width portion 43b that has a groove width less than that of the wide width portion 43a. A groove width of the narrow width portion 43b is 60% to 90% of the groove width of the wide width portion 43a.

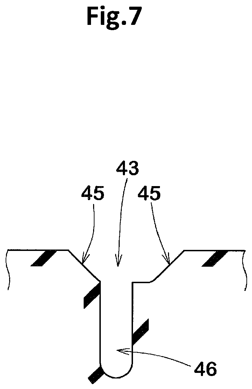

FIG. 7 is a cross-sectional view taken along a line B-B in FIG. 6. As shown in FIG. 7, a chamfered portion 45 is preferably connected to an edge of the body portion 43 of the first middle lateral groove 41. A narrow groove portion 46 having a width of 0.5 to 1.5 mm is connected and disposed inward of the chamfered portions 45 in the tire radial direction. A depth of the body portion 43 including the depths of the chamfered portion 45 and the narrow groove portion 46 is, for example, 40% to 60% of the maximum depth of the first shoulder circumferential groove 5. The first middle lateral groove 41 that includes the body portion 43 having such a structure can maintain stiffness of the first middle land portion 13 and enhance steering stability.

As shown in FIG. 6, a groove width and depth of the shallow groove portion 44 of the first middle lateral groove 41 are, for example, 0.3 to 1.5 mm and preferably 0.5 to 1.0 mm. The shallow groove portion 44 is, for example, disposed at an angle greater than that of the body portion 43 with respect to the tire axial direction. The angle of the shallow groove portion 44 with respect to the tire axial direction is, for example, 50 to 70°. The shallow groove portion 44 having such a structure can provide, with its edge, a frictional force in the tire axial direction, and can enhance cornering performance on wet road surfaces.

For example, the first middle terminating groove 42 extends from the first shoulder circumferential groove 5 and terminates in the first middle land portion 13. A length L12, in the tire axial direction, of the first middle terminating groove 42 is, for example, less than the length, in the tire axial direction, of the body portion 43 of the first middle lateral groove 41. Specifically, the length L12 of the first middle terminating groove 42 is 20% to 30% of the width W9, in the tire axial direction, of the ground-contact surface of the first middle land portion 13. The first middle terminating groove 42 having such a structure can enhance wet performance while maintaining stiffness of the first middle land portion 13.

The first middle terminating groove 42 has substantially the same transverse cross-section as the transverse cross-section, shown in FIG. 7, of the body portion 43 of the first middle lateral groove 41. Therefore, the configuration of the transverse cross-section of the first middle lateral groove 41 can be applied to the transverse cross-section of the first middle terminating groove 42.

As shown in FIG. 6, in the second middle land portion 14, a plurality of second middle lateral grooves 50 are disposed. The second middle lateral groove 50 includes a body portion 51 that extends from the second shoulder circumferential groove 6, and a shallow groove portion 52 that extends from the body portion 51 to the second crown circumferential groove 8. The above-described configurations of the body portion 43 and the shallow groove portion 44 of the first middle lateral groove 41, excluding configurations described below, can be applied to the body portion 51 and the shallow groove portion 52 of the second middle lateral groove 50.

For example, the body portion 51 of the second middle lateral groove 50 terminates without extending across the center position, in the tire axial direction, of the ground-contact surface of the second middle land portion 14. A length L13, in the tire axial direction, of the body portion 51 of the second middle lateral groove 50 is 30% to 50% of a width W10, in the tire axial direction, of the ground-contact surface of the second middle land portion 14. In a more preferable embodiment, the length L13, in the tire axial direction, of the body portion 51 of the second middle lateral groove 50 is less than the length L11, in the tire axial direction, of the body portion 43 of the first middle lateral groove 41. The second middle lateral groove 50 that includes the body portion 51 having such a structure can enhance wet performance while appropriately maintaining stiffness of the second middle land portion 14.

In the crown land portion 15, a plurality of first crown lateral grooves 56 and a plurality of second crown lateral grooves 57 are disposed.

The first crown lateral groove 56 extends from the first crown circumferential groove 7 and terminates in the crown land portion 15 without reaching the second crown circumferential groove 8. A length L14, in the tire axial direction, of the first crown lateral groove 56 is, for example, 10% to 30% of a width W11, in the tire axial direction, of the ground-contact surface of the crown land portion 15. In a preferable embodiment, the length L14 of the first crown lateral groove 56 is less than each of the length L11, in the tire axial direction, of the body portion 43 of the first middle lateral groove 41, the length L12, in the tire axial direction, of the first middle terminating groove 42, and the length L13, in the tire axial direction, of, the body portion 51 of the second middle lateral groove 50. The first crown lateral groove 56 having such a structure can assuredly maintain stiffness of the crown land portion 15 and can enhance steering stability while supplementing wet performance.

The second crown lateral groove 57 includes, for example, a body portion 58 that extends from the second crown circumferential groove 8 in the tire axial direction, and a shallow groove portion 59 that extends from the body portion 58 and terminates without reaching the first crown circumferential groove 7.

The body portion 58 of the second crown lateral groove 57 extends from the second crown circumferential groove 8 and terminates in the crown land portion 15 without reaching the first crown circumferential groove 7. A length L15, in the tire axial direction, of the body portion 58 of the second crown lateral groove 57 is, for example, 45% to 60% of the width W11, in the tire axial direction, of the ground-contact surface of the crown land portion 15. In a preferable embodiment, the length L15 of the body portion 58 of the second crown lateral groove 57 is preferably less than the length L11, in the tire axial direction, of the body portion 43 of the first middle lateral groove 41, and greater than the length L13, in the tire axial direction, of the body portion 51 of the second middle lateral groove 50. The second crown lateral groove 57 that includes the body portion 58 having such a structure contributes to well-balanced enhancement of steering stability and wet performance.

The shallow groove portion 59 of the second crown lateral groove 57 has a groove width and depth of, for example, 0.3 to 1.5 mm and preferably 0.5 to 1.0 mm. For example, the shallow groove portion 59 of the second crown lateral groove 57 extends at an angle greater than that of the body portion 58 with respect to the tire axial direction. The shallow groove portion 59 of the second crown lateral groove 57 is inclined in the same direction as the direction in which the shallow groove portion 44 of the first middle lateral groove 41 is inclined. The angle of the shallow groove portion 59 of the second crown lateral groove 57 with respect to the tire axial direction is, for example, 50 to 70°. The second crown lateral groove 57 that includes the shallow groove portion 59 having such a structure contributes to enhancement of cornering performance during running on wet road surfaces.

Although the tire according to the embodiments of the present invention has been described above in detail, the present invention is not limited to the above-described specific embodiments, and various modifications can be made to implement the technique of the present invention.

### Examples

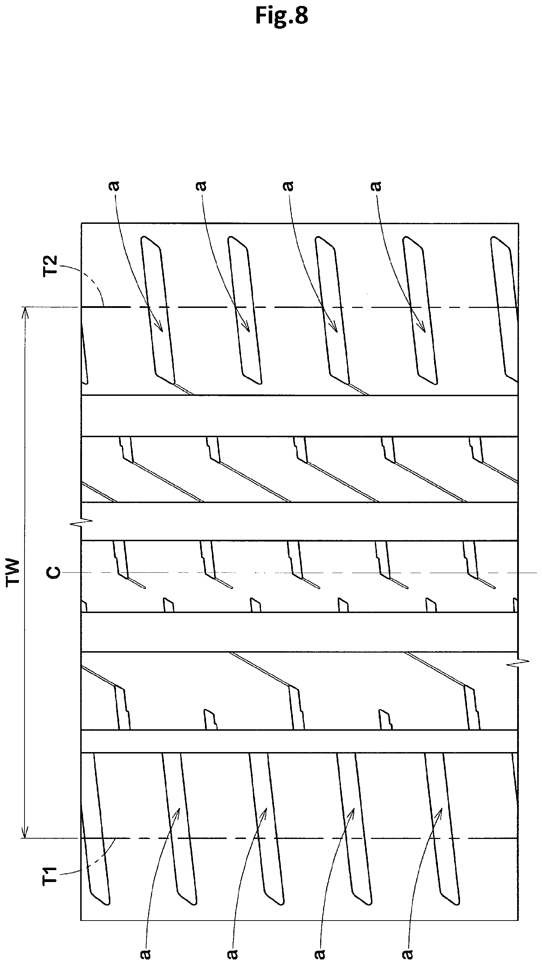

Tires having a size of 225/50R17 and the basic pattern shown in FIG. 1 were produced as test tires according to the specifications indicated in Tables 1 to 3. In addition, as a comparative example, a tire having a tread portion shown in FIG. 8 was produced as a test tire. Each shoulder lateral groove a of the tire of the comparative example extended in the tire axial direction with a uniform groove width. The tire of the comparative example was substantially the same as the tire shown in FIG. 1, except for the above-described structure. For each test tire, steering stability and wet performance were tested. Specifications common to the test tires and test methods were as follows.
Rim on which the tire was mounted: 17 × 7.5 J
Tire internal pressure: 220 kPa for front wheel, 240 kPa for rear wheel
Test vehicle: a rear wheel drive vehicle having an engine displacement of 2000 cc
Tire mounting positions: all wheels

### <Steering Stability>

Sensory evaluation was made by a driver for steering stability when the test vehicle was caused to run on a dry road surface. The results are indicated as scores with the score of the steering stability of the comparative example being 100. The greater the value is, the more excellent the steering stability is.

### <Wet performance>

Sensory evaluation was made by a driver for wet performance when the test vehicle was caused to run on a wet road surface. The results are indicated as scores with the score of the wet performance of the comparative example being 100. The greater the value is, the more excellent the wet performance is.

The test results are indicated in Tables 1 to 3.

**[Table 1]**

| | Comparative example | Example 1 | Example 2 | Example 3 | Example 4 | Example 5 | Example 6 | Example 7 | Example 8 | Example 9 |
|---|---|---|---|---|---|---|---|---|---|---|
| Figure showing tread pattern | FIG. 8 | FIG. 1 | FIG. 1 | FIG. 1 | FIG. 1 | FIG. 1 | FIG. 1 | FIG. 1 | FIG. 1 | FIG. 1 |
| Groove width W3 at inner end/maximum groove width W2 (%) in first shoulder lateral groove | 100 | 75 | 50 | 70 | 80 | 90 | 75 | 75 | 75 | 75 |
| Groove width W4 at first tread end/maximum groove width W2 (%) in first shoulder lateral groove | 100 | 58 | 58 | 58 | 58 | 58 | 45 | 50 | 65 | 70 |
| Groove width W7 at outer end/maximum groove width W2 (%) in first shoulder lateral groove | 100 | 20 | 20 | 20 | 20 | 20 | 20 | 20 | 20 | 20 |
| Length L4 of inner portion/width W5 of first shoulder land portion (%) | - | 20 | 20 | 20 | 20 | 20 | 20 | 20 | 20 | 20 |
| Length L6 of outer portion/width W5 of first shoulder land portion (%) | 80 | 80 | 80 | 80 | 80 | 80 | 80 | 80 | 80 | 80 |
| Steering stability (score) | 100 | 107 | 108 | 107 | 106 | 104 | 107 | 107 | 106 | 105 |
| Wet performance (score) | 100 | 105 | 102 | 104 | 105 | 105 | 103 | 104 | 106 | 106 |

**[Table 2]**

| | Example 10 | Example 11 | Example 12 | Example 13 | Example 14 | Example 15 | Example 16 | Example 17 |
|---|---|---|---|---|---|---|---|---|
| Figure showing tread pattern | FIG. 1 | FIG. 1 | FIG. 1 | FIG. 1 | FIG. 1 | FIG. 1 | FIG. 1 | FIG. 1 |
| Groove width W3 at inner end/maximum groove width W2 (%) in first shoulder lateral groove | 75 | 75 | 75 | 75 | 75 | 75 | 75 | 75 |
| Groove width W4 at first tread end/maximum groove width W2 (%) in first shoulder lateral groove | 58 | 58 | 58 | 58 | 58 | 58 | 58 | 58 |
| Groove width W7 at outer end/maximum groove width W2 (%) in first shoulder lateral groove | 10 | 15 | 25 | 30 | 20 | 20 | 20 | 20 |
| Length L4 of inner portion/width W5 of first shoulder land portion (%) | 20 | 20 | 20 | 20 | 10 | 15 | 25 | 30 |
| Length L6 of outer portion/width W5 of first shoulder land portion (%) | 80 | 80 | 80 | 80 | 80 | 80 | 80 | 80 |
| Steering stability (score) | 108 | 107 | 106 | 105 | 105 | 106 | 107 | 107 |
| Wet performance (score) | 104 | 104 | 105 | 105 | 106 | 105 | 105 | 102 |

**[Table 3]**

| | Example 18 | Example 19 | Example 20 | Example 21 |
|---|---|---|---|---|
| Figure showing tread pattern | FIG. 1 | FIG. 1 | FIG. 1 | FIG. 1 |
| Groove width W3 at inner end/maximum groove width W2 (%) in first shoulder lateral groove | 75 | 75 | 75 | 75 |
| Groove width W4 at first tread end/maximum groove width W2 (%) in first shoulder lateral groove | 58 | 58 | 58 | 58 |
| Groove width W7 at outer end/maximum groove width W2 (%) in first shoulder lateral groove | 20 | 20 | 20 | 20 |
| Length L4 of inner portion/width W5 of first shoulder land portion (%) | 20 | 20 | 20 | 20 |
| Length L6 of outer portion/width W5 of first shoulder land portion (%) | 70 | 75 | 85 | 90 |
| Steering stability (score) | 108 | 107 | 107 | 106 |
| Wet performance (score) | 104 | 105 | 105 | 106 |

According to Tables 1 to 3, it is understood that the tires of the examples had significantly enhanced steering stability and wet performance as compared with the comparative example. That is, it was confirmed that the tire according to the present invention had enhanced wet performance while maintaining steering stability on dry road surfaces.

## Claims

1. A tire (1) comprising
a tread portion (2), wherein
the tread portion (2) includes a plurality of circumferential grooves (3) disposed between a first tread end (T1) and a second tread end (T2) so as to continuously extend in a tire circumferential direction, and a plurality of land portions (4) demarcated by the plurality of circumferential grooves (3),
the plurality of circumferential grooves (3) include a first shoulder circumferential groove (5) disposed closest to the first tread end (T1),
the plurality of land portions (4) include a first shoulder land portion (11) demarcated by the first shoulder circumferential groove (5), the first shoulder land portion (11) including the first tread end (T1),
the first shoulder land portion (11) includes a plurality of first shoulder lateral grooves (20) extending from the first shoulder circumferential groove (5) to a position beyond the first tread end (T1),
at least one of the first shoulder lateral grooves (20) includes an inner end (20i) connected to the first shoulder circumferential groove (5), a maximum groove width portion (21) at which the first shoulder lateral groove (20) has a maximum groove width (W2) in a ground-contact surface of the first shoulder land portion (11), and an outer portion (22) disposed outward of the first tread end (T1) in a tire axial direction, the outer portion (22) including a first portion (27), and a second portion (28) disposed outward of the first portion (27) in the tire axial direction,
a groove width (W3) at the inner end (20i) and a groove width (W4), on the first tread end (T1), of the first shoulder lateral groove (20) are each less than the maximum groove width (W2),
a groove width of the outer portion (22) is reduced outward in the tire axial direction, and a groove width of the first portion (27) is reduced outward in the tire axial direction at a first reduction rate,
**characterized in that** a groove width of the second portion (28) is reduced outward in the tire axial direction at a second reduction rate less than the first reduction rate.

2. The tire (1) according to claim 1, wherein
the groove width (W3) of the inner end (20i) is 50% to 70% of the maximum groove width (W2).

3. The tire (1) according to claim 1 or 2, wherein
the first shoulder lateral groove (20) includes an outer end in the tire axial direction, and
a groove width (W7) of the outer end is 10% to 30% of the maximum groove width (W2).

4. The tire (1) according to any one of claims 1 to 3, wherein
the first shoulder lateral groove (20) further includes an inner portion (23) extending outward from the inner end (20i) in the tire axial direction with a uniform groove width, and
a length (L8), in the tire axial direction, of the second portion (28) is greater than a length (L4), in the tire axial direction, of the inner portion (23).

5. The tire (1) according to any one of claims 1 to 4, wherein
a length (L8), in the tire axial direction, of the second portion (28) is less than a length (L9), in the tire axial direction, of a portion of the first shoulder lateral groove (20) excluding the second portion (28) and the inner portion (23).

6. The tire (1) according to any one of claims 1 to 5, wherein
the first shoulder lateral groove (20) includes an edge on one side in the tire circumferential direction, and an edge on another side in the tire circumferential direction,
chamfered portions (30) are connected to the edge on the one side and the edge on the other side, and
each chamfered portion (30) includes an inclined surface (30a) extending diagonally from a corresponding one of the edges.

7. The tire (1) according to claim 6, wherein
the chamfered portion (30) connected to the edge on the one side extends from the inner end (20i) of the first shoulder lateral groove (20) to a position preceding the first tread end (T1).

8. The tire (1) according to claim 6 or 7, wherein
the edge on the one side linearly extends from the inner end (20i) to the maximum groove width portion (21), and
the chamfered portion (30) connected to the edge on the one side extends from the inner end (20i) to the maximum groove width portion (21) with a uniform width.

9. The tire (1) according to any one of claims 6 to 8, wherein
the first shoulder lateral groove (20) further includes an inner portion (23) extending outward from the inner end (20i) in the tire axial direction with a uniform groove width, and
the chamfered portion (30) connected to the edge on the other side is disposed at least in the inner portion (23) and the maximum groove width portion (21).

10. The tire (1) according to any one of claims 6 to 9, wherein
the chamfered portion (30) connected to the edge on the other side extends from the maximum groove width portion (21) to a position beyond the first tread end (T1).

## Patentansprüche

1. Reifen (1), umfassend
einen Laufflächenabschnitt (2), wobei
der Laufflächenabschnitt (2) eine Vielzahl von Umfangsrillen (3), die zwischen einem ersten Laufflächenende (T1) und einem zweiten Laufflächenende (T2) angeordnet sind, so dass sie sich kontinuierlich in einer Reifenumfangsrichtung erstrecken, und eine Vielzahl von Landabschnitten (4), die durch die Vielzahl von Umfangsrillen (3) abgegrenzt sind, umfasst,
die Vielzahl von Umfangsrillen (3) eine erste Schulterumfangsrille (5) umfasst, die dem ersten Laufflächenende (T1) am nächsten angeordnet ist,
die Vielzahl von Landabschnitten (4) einen ersten Schulterlandabschnitt (11) umfasst, der durch die erste Schulterumfangsrille (5) abgegrenzt ist, wobei der erste Schulterlandabschnitt (11) das erste Laufflächenende (T1) umfasst,
der erste Schulterlandabschnitt (11) eine Vielzahl von ersten Schulterquerrillen (20) umfasst, die sich von der ersten Schulterumfangsrille (5) zu einer Position jenseits des ersten Laufflächenendes (T1) erstrecken,
mindestens eine der ersten Schulterquerrillen (20) ein inneres Ende (20i), das mit der ersten Schulterumfangsrille (5) verbunden ist, einen Abschnitt (21) maximaler Rillenbreite, an dem die erste Schulterquerrille (20) eine maximale Rillenbreite (W2) in einer Bodenkontaktfläche des ersten Schulterlandabschnitts (11) aufweist, und einen äußeren Abschnitt (22), der in einer Reifenaxialrichtung außen von dem ersten Laufflächenende (T1) angeordnet ist, umfasst, wobei der äußere Abschnitt (22) einen ersten Abschnitt (27) und einen zweiten Abschnitt (28), der in der Reifenaxialrichtung außen von dem ersten Abschnitt (27) angeordnet ist, umfasst,
eine Rillenbreite (W3) an dem inneren Ende (20i) und eine Rillenbreite (W4) an dem ersten Laufflächenende (T1) der ersten Schulterquerrille (20) jeweils kleiner als die maximale Rillenbreite (W2) sind,
eine Rillenbreite des äußeren Abschnitts (22) in der Reifenaxialrichtung nach außen reduziert ist, und eine Rillenbreite des ersten Abschnitts (27) in der Reifenaxialrichtung mit einer ersten Reduktionsrate nach außen reduziert ist,
**dadurch gekennzeichnet, dass** eine Rillenbreite des zweiten Abschnitts (28) in der Reifenaxialrichtung mit einer zweiten Reduktionsrate, die kleiner als die erste Reduktionsrate ist, nach außen reduziert ist.

2. Reifen (1) nach Anspruch 1, wobei
die Rillenbreite (W3) des inneren Endes (20i) 50 % bis 70 % der maximalen Rillenbreite (W2) beträgt.

3. Reifen (1) nach Anspruch 1 oder 2, wobei
die erste Schulterquerrille (20) ein äußeres Ende in der Reifenaxialrichtung umfasst, und
eine Rillenbreite (W7) des äußeren Endes 10 % bis 30 % der maximalen Rillenbreite (W2) beträgt.

4. Reifen (1) nach einem der Ansprüche 1 bis 3, wobei
die erste Schulterquerrille (20) ferner einen inneren Abschnitt (23) umfasst, der sich von dem inneren Ende (20i) in der Reifenaxialrichtung mit einer einheitlichen Rillenbreite nach außen erstreckt, und
eine Länge (L8) des zweiten Abschnitts (28) in der Reifenaxialrichtung größer als eine Länge (L4) des inneren Abschnitts (23) in der Reifenaxialrichtung ist.

5. Reifen (1) nach einem der Ansprüche 1 bis 4, wobei
eine Länge (L8) des zweiten Abschnitts (28) in der Reifenaxialrichtung kleiner als eine Länge (L9) eines Abschnitts der ersten Schulterquerrille (20) mit Ausnahme des zweiten Abschnitts (28) und des inneren Abschnitts (23) in der Reifenaxialrichtung ist.

6. Reifen (1) nach einem der Ansprüche 1 bis 5, wobei
die erste Schulterquerrille (20) eine Kante auf einer Seite in der Reifenumfangsrichtung und eine Kante auf einer anderen Seite in der Reifenumfangsrichtung umfasst,
abgeschrägte Abschnitte (30) mit der Kante auf der einen Seite und der Kante auf der anderen Seite verbunden sind, und
jeder abgeschrägte Abschnitt (30) eine geneigte Fläche (30a) umfasst, die sich diagonal von einer entsprechenden der Kanten erstreckt.

7. Reifen (1) nach Anspruch 6, wobei
der abgeschrägte Abschnitt (30), der mit der Kante auf der einen Seite verbunden ist, sich von dem inneren Ende (20i) der ersten Schulterquerrille (20) zu einer Position vor dem ersten Laufflächenende (T1) erstreckt.

8. Reifen (1) nach Anspruch 6 oder 7, wobei
die Kante sich auf der einen Seite linear von dem inneren Ende (20i) zu dem Abschnitt (21) maximaler Rillenbreite erstreckt, und
der abgeschrägte Abschnitt (30), der mit der Kante auf der einen Seite verbunden ist, sich mit einer einheitlichen Breite von dem inneren Ende (20i) zu dem Abschnitt (21) maximaler Rillenbreite erstreckt.

9. Reifen (1) nach einem der Ansprüche 6 bis 8, wobei
die erste Schulterquerrille (20) ferner einen inneren Abschnitt (23) umfasst, der sich von dem inneren Ende (20i) in der Reifenaxialrichtung mit einer einheitlichen Rillenbreite nach außen erstreckt, und
der abgeschrägte Abschnitt (30), der mit der Kante auf der anderen Seite verbunden ist, zumindest in dem inneren Abschnitt (23) und dem Abschnitt (21) maximaler Rillenbreite angeordnet ist.

10. Reifen (1) nach einem der Ansprüche 6 bis 9, wobei
der abgeschrägte Abschnitt (30), der mit der Kante auf der anderen Seite verbunden ist, sich von dem Abschnitt (21) maximaler Rillenbreite zu einer Position jenseits des ersten Laufflächenendes (T1) erstreckt.

## Revendications

1. Pneumatique (1) comprenant
une portion formant bande de roulement (2), dans lequel
la portion formant bande de roulement (2) inclut une pluralité de rainures circonférentielles (3) disposées entre une première extrémité de bande de roulement (T1) et une seconde extrémité de bande de roulement (T2) de manière à s'étendre en continu dans une direction circonférentielle du pneumatique, et une pluralité de portions en relief (4) délimitées par la pluralité de rainures circonférentielles (3),
la pluralité de rainures circonférentielles (3) incluent une première rainure circonférentielle d'épaulement (5) disposée au plus près de la première extrémité de bande de roulement (T1),
la pluralité de portions en relief (4) incluent une première portion en relief d'épaulement (11) délimitée par la première rainure circonférentielle d'épaulement (5), la première portion en relief d'épaulement (11) incluant la première extrémité de bande de roulement (T1),
la première portion en relief d'épaulement (11) inclut une pluralité de premières rainures latérales d'épaulement (20) s'étendant depuis la première rainure circonférentielle d'épaulement (5) jusqu'à une position au-delà de la première extrémité de bande de roulement (T1),
l'une au moins des premières rainures latérales d'épaulement (20) inclut une extrémité intérieure (20i) connectée à la première rainure circonférentielle d'épaulement (5), une portion à largeur de rainure maximum (21) au niveau de laquelle la première rainure latérale d'épaulement (20) a une largeur de rainure maximum (W2) dans une surface de contact au sol de la première portion en relief d'épaulement (11), et une portion extérieure (22) disposée à l'extérieur de la première extrémité de bande de roulement (T1) dans une direction axiale du pneumatique, la portion extérieure (22) incluant une première portion (27) et une seconde portion (28) disposée à l'extérieur de la première portion (27) dans la direction axiale du pneumatique,
une largeur de rainure (W3) au niveau de l'extrémité intérieure (20i) et une largeur de rainure (W4), sur la première extrémité de bande de roulement (T1), de la première rainure latérale d'épaulement (20) sont chacune inférieures à la largeur de rainure maximum (W2),
une largeur de rainure de la portion extérieure (22) est réduite vers l'extérieur dans la direction axiale du pneumatique, et une largeur de rainure de la première portion (27) est réduite vers l'extérieur dans la direction axiale du pneumatique à un premier taux de réduction,
**caractérisé en ce que**
une largeur de rainure de la seconde portion (28) est réduite vers l'extérieur dans la direction axiale du pneumatique à un second taux de réduction inférieur au premier taux de réduction.

2. Pneumatique (1) selon la revendication 1, dans lequel la largeur de rainure (W3) de l'extrémité intérieure (20i) est de 50 % à 70 % de la largeur de rainure maximum (W2).

3. Pneumatique (1) selon la revendication 1 ou 2, dans lequel
la première rainure latérale d'épaulement (20) inclut une extrémité extérieure dans la direction axiale du pneumatique, et
une largeur de rainure (W7) de l'extrémité extérieure est de 10 % à 30 % de la largeur de rainure maximum (W2).

4. Pneumatique (1) selon l'une quelconque des revendications 1 à 3, dans lequel
la première rainure latérale d'épaulement (20) inclut en outre une portion intérieure (23) s'étendant vers l'extérieur depuis l'extrémité intérieure (20i) dans la direction axiale du pneumatique avec une largeur de rainure uniforme, et
une longueur (L8), dans la direction axiale du pneumatique, de la seconde portion (28) est supérieure à une longueur (L4), dans la direction axiale du pneumatique, de la portion intérieure (23).

5. Pneumatique (1) selon l'une quelconque des revendications 1 à 4, dans lequel
une longueur (L8), dans la direction axiale du pneumatique, de la seconde portion (28) est inférieure à une longueur (L9), dans la direction axiale du pneumatique, d'une portion de la première rainure latérale d'épaulement (20) excluant la seconde portion (28) et la portion intérieure (23).

6. Pneumatique (1) selon l'une quelconque des revendications 1 à 5, dans lequel
la première rainure latérale d'épaulement (20) inclut un bord sur un côté dans la direction circonférentielle du pneumatique, et un bord sur un autre côté dans la direction circonférentielle du pneumatique,
des portions chanfreinées (30) sont connectées au bord sur ledit un côté et au bord sur ledit autre côté, et
chaque portion chanfreinée (30) inclut une surface inclinée (30a) s'étendant en diagonale depuis l'un des bords correspondant.

7. Pneumatique (1) selon la revendication 6, dans lequel
la portion chanfreinée (30) connectée au bord sur ledit un côté s'étend depuis l'extrémité intérieure (20i) de la première rainure latérale d'épaulement (20) jusqu'à une position précédant la première extrémité de bande de roulement (T1).

8. Pneumatique (1) selon la revendication 6 ou 7, dans lequel
le bord sur ledit un côté s'étend linéairement depuis l'extrémité intérieure (20i) jusqu'à la portion à largeur de rainure maximum (21), et
la portion chanfreinée (30) connectée au bord sur ledit un côté s'étend depuis l'extrémité intérieure (20i) jusqu'à la portion à largeur de rainure maximum (21) avec une largeur uniforme.

9. Pneumatique (1) selon l'une quelconque des revendications 6 à 8, dans lequel
la première rainure latérale d'épaulement (20) inclut en outre une portion intérieure (23) s'étendant vers l'extérieur depuis l'extrémité intérieure (20i) dans la direction axiale du pneumatique avec une largeur de rainure uniforme, et
la portion chanfreinée (30) connectée au bord sur ledit autre côté est disposée au moins dans la portion intérieure (23) et dans la portion à largeur de rainure maximum (21).

10. Pneumatique (1) selon l'une quelconque des revendications 6 à 9, dans lequel
la portion chanfreinée (30) connectée au bord sur ledit autre côté s'étend depuis la portion à largeur de rainure maximum (21) jusqu'à une position au-delà de la première extrémité de bande de roulement (T1).
